# EUROPEAN PATENT SPECIFICATION

(11) **EP 1 575 367 B1**
(45) Date of publication and mention of the grant of the patent: **29.11.2006**
(21) Application number: 03778108.5
(22) Date of filing: 30.10.2003
(51) Int. Cl.: A23B 4/28, A23B 4/02, A23B 4/023, A23L 1/314, A23L 1/318

(54) **TREATMENT OF MEAT BY INJECTION OF BRINE SOLUTIONS OF DIFFERENT CONCENTRATIONS**
BEHANDLUNG VON FLEISCH DURCH EINSPRITZEN VON UNTERSCHIEDLICH KONZENTRIERTEN SALZLÖSUNGEN
TRAITEMENT D'UNE VIANDE AU MOYEN D'INJECTION DE SOLUTIONS SALINES DE CONCENTRATIONS DIFFERENTES

(30) Priority: 18.12.2002 US 322838
(43) Date of publication of application: 21.09.2005
(73) Proprietor: Stork Townsend Inc., Des Moines IA 50317 (US)
(72) Inventor: ALEXANDER, David, W., Des Moines, IA 50317 (US); MCCLOSKEY, Douglas, N., Des Moines, IA 50317 (US)
(74) Representative: Van den Heuvel, Henricus Theodorus
(86) International application number: PCT/US2003/035179
(87) International publication number: WO 2004/060071

(56) References cited:
- EP-A- 0 297 592
- WO-A-95/28088
- US-A- 3 850 090
- US-A- 5 505 972
- US-A- 6 165 528

## Description

### BACKGROUND OF THE INVENTION

It is common to inject brine or similar fluids into meat products for purposes of preservation and flavoring. Many machines have been devised which have a battery of needles which are adapted to inject fluid into the meat products through the needles.

The absorption of brine in a meat product is complicated by variations in the lean content of the meat. Low lean (or fat) areas tend not to absorb as much fluid as high lean areas. For example, a 90% lean area on meat product will absorb approximately 10% of any given solution while a 50% lean area will absorb approximately 5% of any given solution. However, existing machines lack the ability to effectively inject brine into the meat product to result in a uniform distribution of brine ingredients through the meat product, particularly when variations in the lean content of the meat products exist.

US-A-5 505 972 and EP-A-0 297 592 propose methods of injecting brine solutions into meat products for improving their quality.

Therefore, a principal object of this invention is to provide a method for injecting fluids into meat products which will result in a uniform distribution of brine ingredients through the meat product.

These and other objects will be apparent to those skilled in the art.

### SUMMARY OF THE INVENTION

The present invention provides a method of injecting a brine solution into a meat product as claimed in claim 1. The process includes the steps of providing high concentration brine to a brine source connected to injection heads designated for fat areas and low concentration brine to the brine source connected to injection heads designated for lean areas, and injecting the meat product with fluid in accordance with the location of lean and fat areas.

### DESCRIPTION OF THE DRAWINGS

Fig. 1 is a plan view of the device for carrying out the method of this invention; and
Fig. 2 is a side elevation view of the device .

### DESCRIPTION OF THE PREFERRED EMBODIMENT

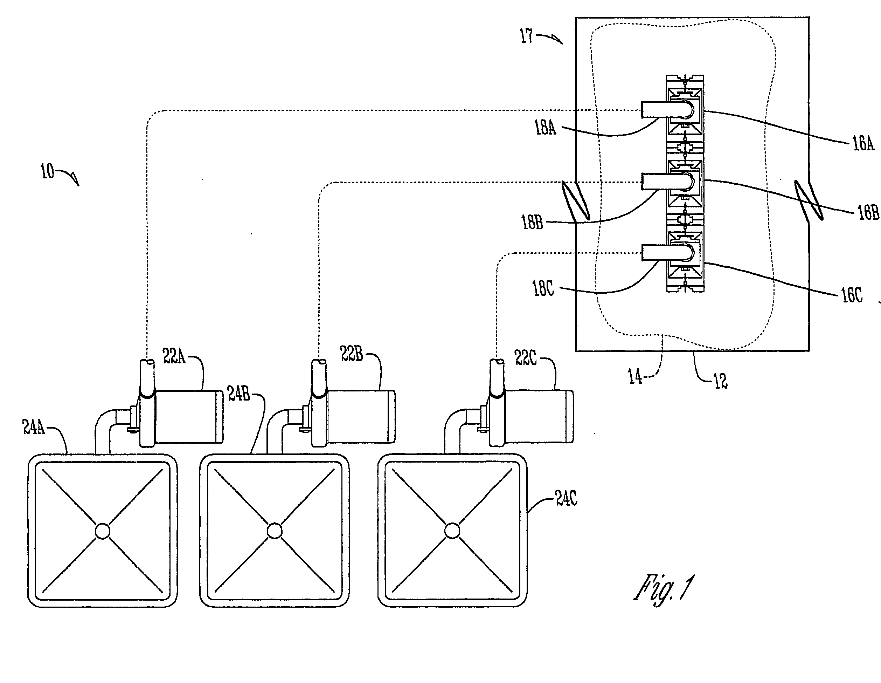

With reference to Fig. 1, a meat injection machine 10 of this invention has a horizontal conveyor 12 for intermittently longitudinally moving meat products 14 to be injected. A plurality of injection heads 16(A, B, and C) form an injection zone 17 and are operatively associated with a corresponding plurality of manifolds 18(A, B, and C) above the conveyor 12.

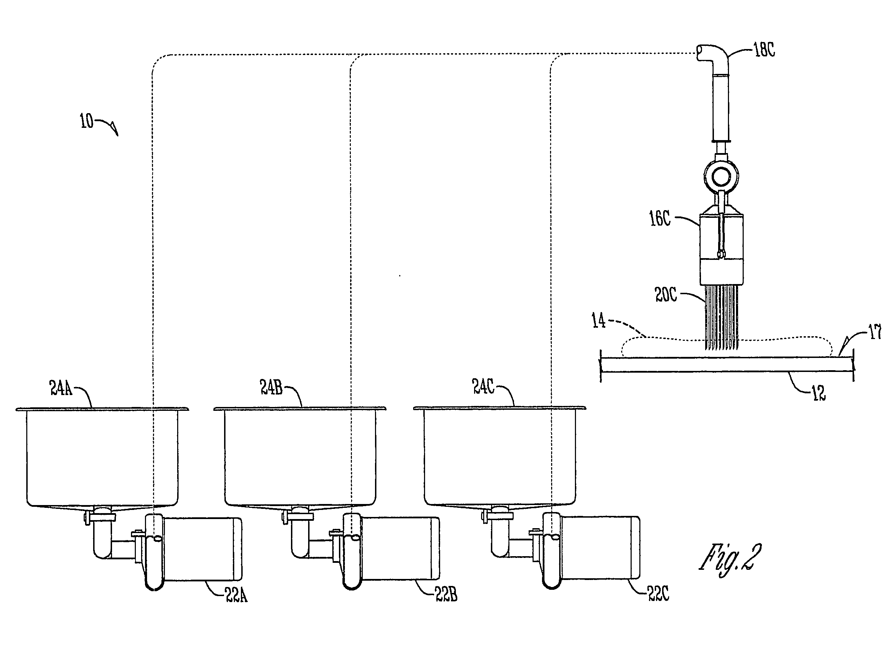

With reference to Fig. 2, the injection head 16C has associated therewith a plurality of vertically disposed injection needles forming a bank of injection needles 20C which inject fluid into meat products 14. Each injection head 16C (16A and 16B not shown) has associated therewith a bank of injection needles 20C (20A and 20B not shown).

Referring to Fig. 1 and Fig. 2, a separate fluid pump 22(A, B, and C) is connected to each of the heads 16(A, B, and C) for supplying pressurized fluids to the needles 20C (20A and 20B not shown). Each of the heads 16(A, B, and C) are connected to a separate reservoir 24(A, B, and C) of brine fluid via the pump 22(A, B, and C). The concentration of brine is different in each reservoir 24.

It will be understood that additional rows of injection heads 16 with separate reservoirs 24 can be provided for the meat injection machine 10 without departing from the present invention.

In operation, meat products 14(pork bellies for example) are placed upon the in-feed side of the machine 10. As the meat product 14 advances on the conveyor 12 into the injection zone 17, the individual injection heads 16 come into contact with the meat product 14. As the injection heads 16 come into contact with the meat product 14, the needles 20 penetrate the meat product 14. The needles 20 subsequently inject solution into the meat product 14.

The meat product 14 is visually inspected and/or historical data is used to determine the location of lean and fat areas in the meat product 14. According to this information, the brine solution supplied to each reservoir 24 is formulated to have the optimum salt and nitrite concentration for the lean and fat distribution for the particular meat product 14 to be treated. As stated before, fat areas tend not to absorb as much fluid as lean areas. The brine solution supplied to each reservoir 24 will be formulated so that, given the same pressures from pumps 22, each head 16 will inject brine with varying concentrations of salt and nitrites where they are needed. For example, a 90% lean area on meat product 14 will absorb approximately 10% of any given solution while a 50% lean area will absorb approximately 5% of any given solution. Accordingly, the present invention would supply a brine solution to the 50% lean area at twice the concentration as the brine solution supplied for the 90% lean area. Thus, the present invention will be understood to provide a more uniform distribution of brine ingredients throughout the meat product 14.

It is therefore seen that the present invention provides a method for injecting fluids into meat products 14 which results in a uniform distribution of brine through the meat product 14.

It is therefore seen that this invention will accomplish at least all of its stated objectives.

## Claims

1. A method of injecting a brine solution into a meat product, comprising: providing an injection zone comprised of a plurality of separate brine injection heads each with banks of injection needles over a meat conveyor positioned longitudinally underneath the injection heads, connecting each of the heads and the needles therein to a separate source of brine fluid with the concentration of brine being different in each source, providing high concentration brine to the brine source connected to heads designated for fat areas and low concentration brine to the brine source connected to heads designated for lean areas, passing the single piece of meat product on the conveyor through the injection zone underneath the injection heads, causing the banks of injection needles to move downwardly to inject the meat product with fluid in accordance with the location of lean and fat areas, and wherein the brine supplied from each fluid source being at the same pressure injecting substantially equal volumes of the high concentration brine and the low concentration brine.

2. The method of claim 1, wherein a separate fluid pump is connected to each head.

## Patentansprüche

1. Verfahren zum Einspritzen einer Salzlösung in ein Fleischprodukt, das umfasst: Bereitstellen einer Einspritzzone, die eine Vielzahl an getrennten Einspritzköpfen umfasst, jeder mit Bänken von Einspritznadeln versehen, über einem Förderer für Fleisch, der sich in Längsrichtung unterhalb der Einspritzköpfe befindet;
Verbinden eines jeden Kopfes und der darin befindlichen Nadeln mit einer getrennten Salzlösungsquelle, wobei die Salzlösungskonzentration in jeder Quelle unterschiedlich ist;
Bereitstellen von hoch konzentrierter Salzlösung für die Salzlösungsquelle, die mit den für fette Bereiche bestimmten Köpfen verbunden ist, und von niedrig konzentrierter Salzlösung für die Salzlösungsquelle, die mit den für magere Bereiche bestimmten Köpfen verbunden ist;
Vorbeiführen des einzelnen Stücks des Fleischprodukts auf dem Förderer durch die unterhalb der Einspritzköpfe befindliche Einspritzzone;
Veranlassen, dass die Bänke mit den Einspritznadeln abwärts bewegt werden, um das Fleischprodukt entsprechend der Lage der mageren und fetten Bereiche mit der Lösung einzuspritzen; und
worin die Salzlösung, die von jeder Lösungsquelle zugeführt wird, unter demselben Druck steht und im Wesentlichen gleiche Volumina der hoch konzentrierten und der niedrig konzentrierten Salzlösung eingespritzt werden.

2. Verfahren nach Anspruch 1, worin eine getrennte Flüssigkeitspumpe mit jedem Kopf verbunden ist.

## Revendications

1. Procédé d'injection d'une solution de saumure dans un produit camé, consistant à :
aménager une zone d'injection constituée d'une pluralité de têtes d'injection de saumure séparées comportant chacune des batteries d'aiguilles d'injection sur un transporteur de viande positionné longitudinalement en dessous des têtes d'injection,
à relier chacune des têtes et des aiguilles dans celles-ci à une source séparée de fluide formant saumure, la concentration de la saumure étant différente dans chaque source,
à amener une saumure fortement concentrée à la source de saumure reliée aux têtes prévues pour les zones grasses et une saumure faiblement concentrée à la source de saumure reliée aux têtes prévues pour les zones maigres,
à faire passer la pièce unique de produit carné sur le transporteur par la zone d'injection en dessous des têtes d'injection,
à faire se déplacer les batteries d'aiguilles d'injection vers le bas pour injecter le fluide dans le produit carné conformément à la localisation des zones maigres et grasses, et
la saumure amenée de chaque source de fluide étant à la même pression, à injecter des volumes sensiblement égaux de la saumure fortement concentrée et de la saumure faiblement concentrée.

2. Procédé selon la revendication 1, dans lequel une pompe à fluide séparée est reliée à chaque tête.
